(19) Europäisches Patentamt

European Patent Office

Office européen des brevets

(11) Numéro de publication : **0 085 637**
**B1**

(12) # FASCICULE DE BREVET EUROPÉEN

(45) Date de publication du fascicule du brevet :
**24.04.85**

(21) Numéro de dépôt : **83420016.4**

(22) Date de dépôt : **28.01.83**

(51) Int. Cl.⁴ : **D 03 D 51/06,** D 03 C 1/00,
D 03 D 49/20, F 16 H 3/60

(54) **Perfectionnements aux mécanismes pour l'entraînement des régulateurs de métiers à tisser.**

(30) Priorité : **29.01.82 FR 8201755**

(43) Date de publication de la demande :
**10.08.83 Bulletin 83/32**

(45) Mention de la délivrance du brevet :
**24.04.85 Bulletin 85/17**

(84) Etats contractants désignés :
**BE CH DE IT LI**

(56) Documents cités :
**FR-A- 1 174 463**
**FR-A- 2 009 542**
**FR-A- 2 357 667**
**US-A- 3 685 371**

(73) Titulaire : **S.A. DES ETABLISSEMENTS STAUBLI**
**(France)**
**F-74210 Faverges (FR)**

(72) Inventeur : **Palau, Joseph**
**"Les Perris" Duingt**
**F-74410 Saint Jorioz (FR)**

(74) Mandataire : **Monnier, Guy et al**
**Cabinet Monnier 142-150 Cours Lafayette**
**F-69003 Lyon (FR)**

Jouve, 18, rue St-Denis, 75001 Paris, France

## Description

La présente invention a trait aux dispositifs connus dans l'industrie textile sous le nom de « régulateurs » et destinés à assurer l'avance du tissu dans les métiers à tisser.

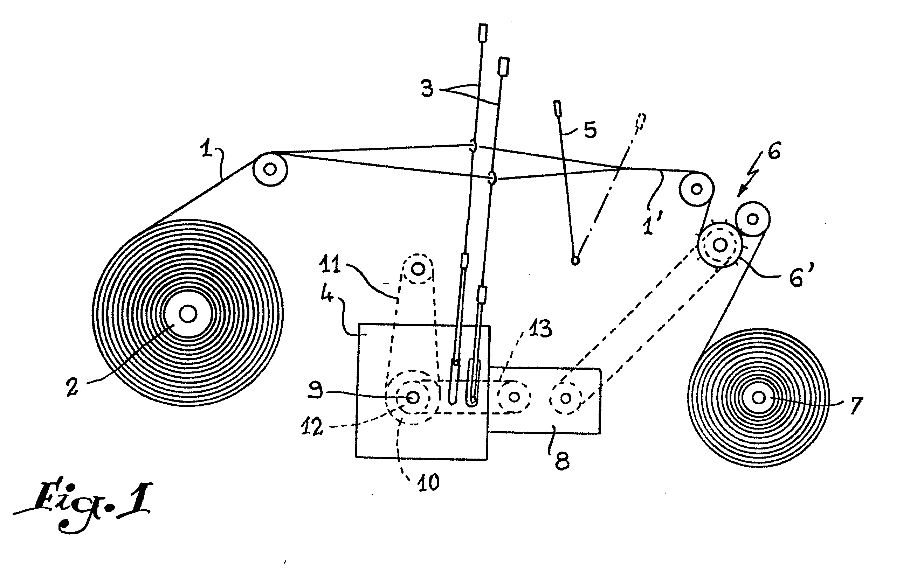

Comme très schématiquement illustré à la fig. 1 du dessin annexé, on sait que dans un métier à tisser usuel la nappe 1 formée par les fils de chaîne est déroulée d'un tambour ou « ensouple » 2 afin d'être soumise à l'action de cadres de lisses 3 commandés verticalement par une ratière ou autre mécanique d'armure 4. Ces cadres 3 opèrent l'ouverture croisée des fils de chaîne en vue de l'insertion successive des fils de trame, lesquels sont serrés les uns contre les autres par un peigne oscillant ou « battant » 5. Le tissu 1' ainsi formé est tiré longitudinalement par un régulateur 6 disposé immédiatement en amont d'un tambour récepteur 7 ; ce régulateur 6 comprend généralement des tambours de renvoi prévus de part et d'autre d'un cylindre moteur 6' pourvu sur sa périphérie d'aiguilles radiales qui pénètrent dans le tissu 1' afin d'assurer le déplacement de celui-ci.

On comprend finalement que c'est la vitesse de rotation de ce régulateur 6 qui fixe en quelque sorte la vitesse de déplacement linéaire du tissu dans le métier. Cette vitesse de déplacement linéaire du tissu dans le métier. Cette vitesse varie évidemment en fonction du nombre de trames à insérer dans le tissu sur une longueur donnée, selon la nature du tissu à réaliser, de telle sorte que l'entraînement du tambour moteur à aiguilles 6' s'effectue habituellement à travers un variateur de vitesse 8. Pour assurer l'entraînement de ce variateur 8 on peut bien entendu avoir recours à un arbre du métier, mais on s'est aperçu qu'on avait intérêt, au moins dans les métiers dans lesquels la mécanique 4 est constituée par une ratière, à adopter comme prise de force l'arbre de ladite ratière, de façon à être ainsi assuré du synchronisme parfait ratière/régulateur.

Ce synchronisme est tout particulièrement intéressant lorsqu'on désire procéder à une opération de détissage à la suite d'un défaut de tissage. En pareil cas le métier et la ratière sont dissociés momentanément l'un de l'autre de façon à ce que la ratière puisse être entraînée indépendamment du métier et être remise en synchronisme avec le programme de tissage. Comme il est alors indispensable de faire reculer le tissu, on conçoit que la liaison ratière-régulateur simplifie les choses du fait que la rotation de la ratière en marche arrière provoque automatiquement le déplacement en arrière du tissu (FR-A-1 174 463).

On a tout récemment proposé de remplacer les programmes « mécaniques » (roues ou chaînes à picots, papier perforé, cartons, etc.) des ratières par des programmes dits « électroniques » : la séquence de commande des différents organes de la ratière est alors donnée par une série de circuits électroniques, introduite de manière aisément remplaçable dans la ratière, de façon à ce que les organes précités se déplacent suivant un ordre déterminé. On conçoit qu'à l'inverse d'un programme mécanique qui doit être déplacé dans le même sens que la ratière elle-même, un tel programme électronique peut sans difficulté être avancé ou reculé sans qu'il soit nécessaire de modifier le sens de rotation de la ratière. Toutefois cette possibilité est restée jusqu'à ce jour inexploitée pour le motif que l'entraînement du régulateur étant lié à celui de la ratière, il est impossible de faire reculer le tissu à l'aide du régulateur lors du détissage si le sens de rotation de la ratière n'est pas lui-même inversé.

C'est à cet inconvénient qu'entend remédier la présente invention, laquelle consiste essentiellement à introduire dans la chaîne cinématique liant l'arbre de la ratière à l'organe d'entrée de mouvement du régulateur, un inverseur de sens de rotation qui est mis en action lorsque la ratière est commandée au détissage.

Conformément à un mode de mise en œuvre préféré de la disposition qui précède, on a recours à un inverseur comprenant au moins un pignon satellite qui engrène simultanément avec deux pièces dentées respectivement solidaires de l'arbre de la ratière et de l'organe d'entrée de mouvement du régulateur, l'immobilisation angulaire du porte-satellite étant assurée sous l'effet d'attraction d'un bobinage branché sur le circuit de la ratière correspondant au détissage.

Le dessin annexé, donné à titre d'exemple, permettra de mieux comprendre l'invention, les caractéristiques qu'elle présente et les avantages qu'elle est susceptible de procurer :

Comme indiqué plus haut,

Figure 1 est un schéma général illustrant l'agencement d'un métier à tisser équipé d'un régulateur entraîné à partir de la ratière.

Figure 2 est une coupe axiale d'un mécanisme établi conformément à l'invention pour l'entraînement du régulateur, lequel mécanisme a été supposé directement monté sur l'arbre de la ratière.

Figure 3 est une coupe transversale schématique suivant le plan indiqué en III-III en fig. 2.

Figure 4 reproduit la fig. 2 à une autre position du porte-satellites ; l'on a indiqué sur cette figure le schéma électrique d'alimentation du bobinage du mécanisme.

En fig. 1 à 3 la référence 9 désigne l'extrémité de l'arbre de la ratière qui dépasse en dehors du carter de celle-ci. L'entraînement de cet arbre 9 est assuré, à la façon en soi connue, par une poulie 10 reliée par une courroie crantée 11 à un arbre du métier à tisser. C'est contre le moyeu de cette poulie 10 qu'est logée la roue de chaîne 12 du mécanisme d'entraînement du régulateur 6, ladite roue 12 étant reliée par une chaîne 13 à l'entrée du variateur 8. La poulie 10 est rendue axialement solidaire, au moyen d'une bride de serrage 14, d'un arbre tubulaire 15 qui renferme l'arbre 9 sus-mentionné, la liaison angulaire entre

2

les deux arbres co-axiaux 9 et 15 étant opérée par les organes de la ratière en fonction du programme de celle-ci ou par ceux du dispositif de recherche du pas en cas de détissage.

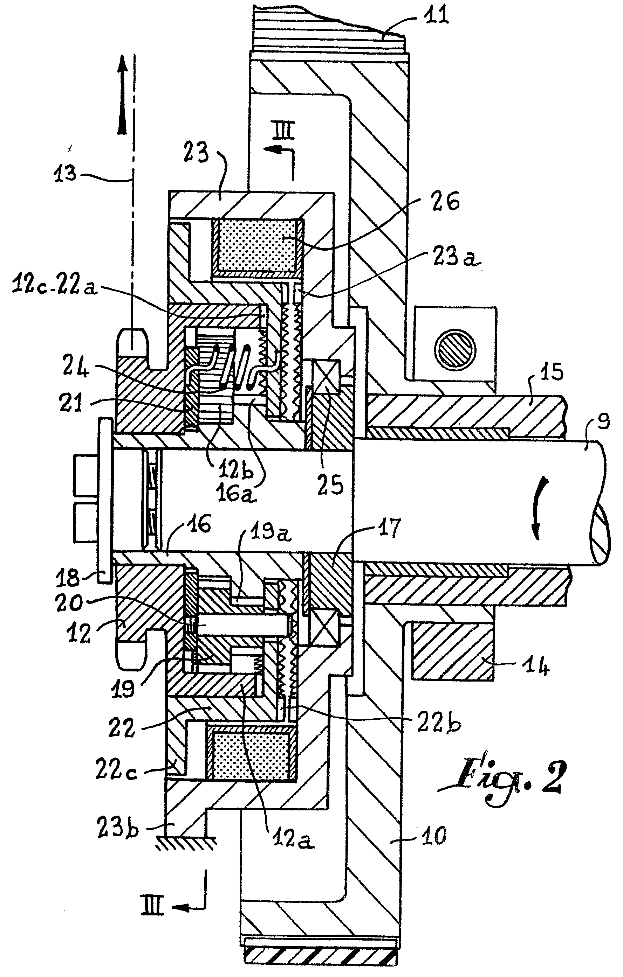

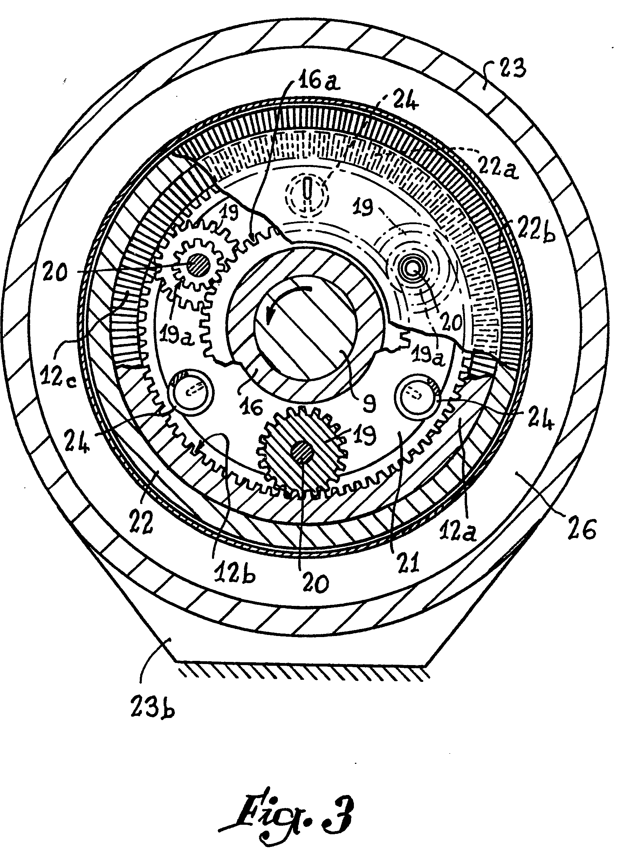

Comme montré en fig. 2 la roue de chaîne 12 est montée folle sur une douille 16 qui est bloquée sur l'arbre 9 entre une butée annulaire intérieure 17 et un chapeau terminal 18, lequel opère simultanément la retenue axiale de la roue 12 précitée. Le moyeu de cette roue 12 est solidaire d'une partie arrière 12a en forme de cuvette cylindrique, pourvue sur sa paroi intérieure d'une denture 12b. Celle-ci coopère avec des pignons satellites 19 (fig. 3), au nombre de trois dans l'exemple de réalisation envisagé, montés fous sur de petits axes 20 fixés en porte-à-faux sur un disque-support 21 ; on observera que ce dernier tourillonne librement sur la douille 16, mais que par contre cette douille comporte une denture 16a qui engrène avec une denture latérale 19a de chaque satellite 19.

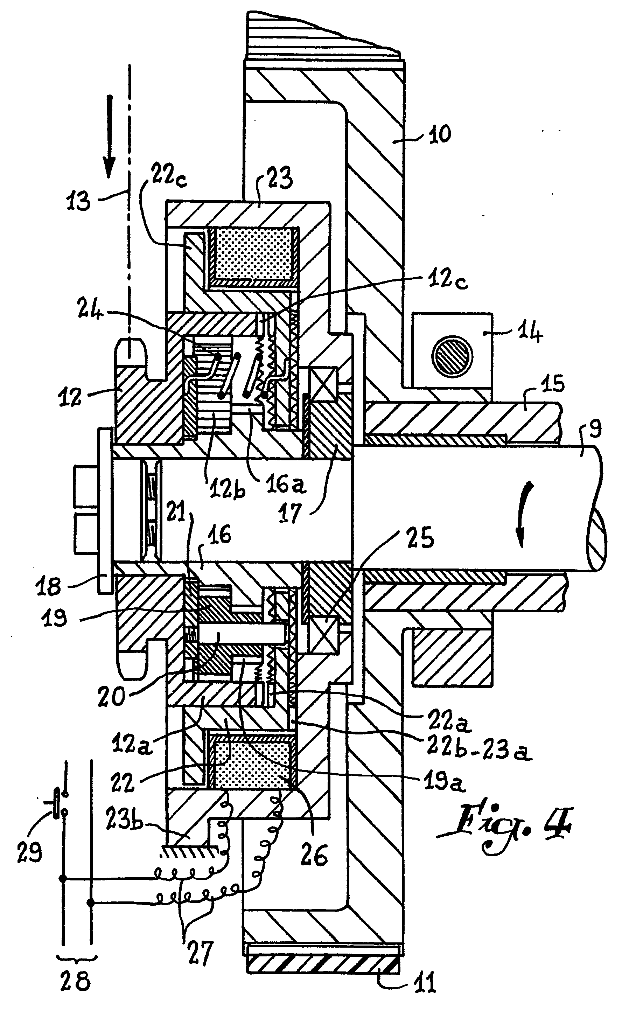

Sur la périphérie de la cuvette 12a est emboîtée à coulissement axial une cage 22 pourvue de deux dentures frontales opposées 22a et 22b. La denture 22a fait face à une denture frontale 12c (fig. 4) ménagée en bout de la cuvette 12a, tandis que la denture 22b, tournée en direction du moyeu de la poulie 10, est destinée à coopérer avec une denture correspondante 23a prévue dans une cloche fixe ou carcasse 23 qu'on décrira plus loin. Il convient de noter que la cage 22 est rappelée vers l'avant par des ressorts 24 disposés entre les pignons 19 et dont les extrémités sont attachées d'une part à ladite cage, d'autre part au disque 21, lequel est arrêté axialement par un épaulement annulaire de la douille 16 ; ces ressorts 24 tendent en conséquence à maintenir en prise les dentures 22a et 12c.

La cloche 23 est montée sur la butée annulaire 17 par l'intermédiaire d'un roulement 25 et elle est maintenue immobile angulairement et axialement par tout moyen de fixation approprié, schématisé en fig. 3 sous la forme d'une queue latérale de blocage 23b. Dans l'espace annulaire ménagé entre le bord de cette cloche 23 et la paroi extérieure de la cage 22 vient se loger un bobinage 26 qui est propre, lorsqu'il est excité, à exercer un effet d'attraction sur le rebord annulaire 22c de la cage 22, et ce à l'encontre de l'action des ressorts 24. Lorsque cette cage 22 est ainsi déplacée axialement, les dentures 22a et 12c viennent en prise, alors que les dentures 22b et 23a sont dégagées l'une de l'autre, le tout comme on le comprendra mieux ci-après par comparaison des fig. 2 et 4.

Le bobinage 26 est relié, à travers des conducteurs schématisés en 27 en fig. 4, au circuit électronique 28 qui est commandé, par exemple par un interrupteur 29, en vue d'actionner la ratière 4 au détissage, si bien que ledit bobinage est alimenté en même temps que le circuit 28 précité.

On comprend dès lors le fonctionnement et le mode d'utilisation du dispositif d'entraînement ci-dessous décrit.

Lorsque l'ensemble métier-ratière fonctionne normalement, c'est-à-dire lors du tissage, le bobinage 26 n'est pas alimenté, de telle sorte que les pièces se trouvent à la position illustrée en fig. 2. Par suite de l'engagement mutuel des dentures 12c et 22a sous l'effet des ressorts 24, la cage 22, qui fait fonction de porte-satellites, est libre de tourner avec la cuvette 12a et le pignon de chaîne 12, de telle sorte que la rotation de l'arbre 9 et de la denture 16a provoque l'entraînement en rotation de la cuvette précitée liée à ladite denture par les pignons 19. Ceux-ci sont animés, non pas d'un mouvement de rotation sur eux-mêmes, mais d'un simple mouvement de révolution, si bien qu'ils ne déterminent aucune inversion du sens de rotation : le pignon de chaîne 12 tourne dans le même sens que l'arbre 9.

Quand par contre la ratière et/ou le dispositif de recherche du pas qui lui est associé sont commandés au détissage par manœuvre de l'interrupteur 29 de fig. 4, le circuit 28 est alimenté en même temps que le bobinage 26 ; ce dernier attire la cage 22 et le déplacement axial de celle-ci a pour effet de dissocier les dentures 12c et 22a et d'engager en revanche les dentures 22b et 23a. La cage 22 est en conséquence immobilisée angulairement par la cloche 23, de sorte que compte tenu de la rotation de la denture 16a les pignons satellites 10 sont obligés de tourner sur eux-mêmes pour entraîner la cuvette 12a et le pignon de chaîne 12. Cette rotation des satellites introduit évidemment une inversion du sens de rotation : le pignon de chaîne 12 tourne dans la direction inverse de l'arbre 9, si bien que le régulateur 6 est lui-même entraîné en marche arrière et opère le recul du tissu 1'.

On conçoit que l'ensemble du mécanisme d'entraînement à inversion automatique du sens de rotation pourrait être monté, non pas directement sur l'arbre 9 de la ratière, mais sur l'arbre d'entrée ou de sortie du variateur de vitesse 8 ou sur le régulateur 6 lui-même. On peut en outre imaginer d'autres dispositifs d'inversion que celui à pignons satellites mentionné ci-dessus.

**Revendications**

1. Mécanisme pour l'entraînement du régulateur d'un métier à tisser à partir de l'arbre de la ratière, caractérisé en ce qu'il comprend un inverseur de sens de rotation qui est interposé entre l'arbre (9) de la ratière (4) et l'organe d'entrée (12) du régulateur (6) et qui est mis en action lorsque ladite ratière est commandée au détissage, de façon à ce que ce régulateur assure le recul du tissu (1') alors que l'arbre précité (9) continue à tourner dans le même sens.

2. Mécanisme suivant la revendication 1, caractérisé en ce que l'inverseur comprend au moins un pignon satellite (19) qui engrène simultanément avec deux pièces dentées (16, 12a) respectivement solidaires de l'arbre (9) de la ratière (4) et de l'organe d'entrée (12), l'immobilisation angulaire du porte-satellite (22) étant assurée sous l'effet d'attraction d'un bobinage (26) convenablement almimenté lors du détissage.

3. Mécanisme suivant la revendication 2, caractérisé en ce que le porte-satellite est constitué par une cage (22) qui s'emboîte sur une cuvette cylindrique (12a) solidaire de l'organe d'entrée (12), laquelle cage comporte deux dentures frontales dont l'une (22a) est destinée à venir en prise avec une denture équivalente (12c) de la cuvette précitée tandis que l'autre (22b) est propre à venir coopérer avec une denture (23a) prévue sur une cloche fixer (23) qui renferme le bobinage (26) assurant le déplacement axial de ladite cage.

4. Mécanisme suivant l'une quelconque des revendications 1 à 3, caractérisé en ce que la commande de l'inverseur est opérée par un circuit électrique (27) alimenté à travers le circuit électrique (28) de la ratière qui se trouve sous tension lorsque cette dernière fonctionne au détissage.

## Claims

1. Mechanism for driving the regulator of a weaving loom from the shaft of the dobby, characterized in that it comprises a means for reversing the direction of rotation which is interposed between the shaft 9 of the dobby 4 and the inlet member 12 of the regulator 6 and which is actuated when said dobby is controlled for unweaving, so that this regulator ensures the reverse travel of the fabric 1' whilst the above-mentioned shaft continues to rotate in the same direction.

2. Mechanism according to Claim 1, characterized in that the reversing means comprises at least one satellite gear 19 which meshes simultaneously with two toothed pieces 16, 12a respectively fast with the shaft 9 of the dobby 4 and with the inlet member 12, the angular immobilization of the satellite vehicle 22 being ensured under the effect of attraction of a winding 26 appropriately supplied during unweaving.

3. Mechanism according to Claim 2, characterized in that the satellite vehicle is constituted by a cage 22 which fits on a cylindrical dish 12a fast with the inlet member 12, which cage comprises two frontal toothings of which one (22a) is adapted to mesh with an equivalent toothing 12c of the abovementioned dish whilst the other (22b) is adapted to cooperate with a toothing 23a provided on a fixed bell 23 which encloses the winding 26 ensuring axial displacement of said cage.

4. Mechanism according to any one of Claims 1 to 3, characterized in that the control of the reversing means is effected by an electric circuit 27 supplied through the electric circuit 28 of the dobby which is under tension when the latter is in unweaving mode.

## Patentansprüche

1. Mechanismus zum Antrieb des Reglers einer Webmaschine von der Schaftmaschinenwelle aus, dadurch gekennzeichnet, daß er einen Drehrichtungsumkehrer aufweist, der zwischen der Welle (9) der Schaftmaschine (4) und dem Eingangsorgan (12) des Reglers (6) angeordnet ist und der in Betrieb gesetzt wird, wenn die Schaftmaschine in den Lösebetrieb gesteuert ist, damit jener Regler den Rücklauf des Gewebes (1') sicherstellt, während die vorerwähnte Welle (9) sich im selben Drehsinne weiterdreht.

2. Mechanismus nach Anspruch 1, dadurch gekennzeichnet, daß der Umkehrer wenigstens ein Planetenzahnrad (19) aufweist, das gleichzeitig in zwei Zahnrädern (16 12a) kämmt, die mit der Welle (9) der Schaftmaschine (4) und dem Eingangsorgan (12) fest verbunden sind, wobei die winkelmäßige Festlegung des Planetenradträgers (22) unter der Anziehwirkung einer Magnetwicklung (26) sichergestellt ist, die im Lösebetrieb erregt ist.

3. Mechanismus nach Anspruch 2, dadurch gekennzeichnet, daß der Planetenradträger von einem Käfig (22) gebildet ist, in den eine zylindrische Trommel (12a) eingepaßt ist, die fest mit dem Eingangsorgan (12) verbunden ist, daß der Käfig zwei Frontzahnungen trägt, von denen die eine (22a) dazu bestimmt ist, mit einer passenden Zahnung (12c) der vorerwähnten Trommel in Eingriff zu gelangen, während die andere (22b) dazu geeignet ist, mit einer Zahnung (23a) zusammenzuwirken, die an einer festen Glocke (23) ausgebildet ist, die die Magnetwicklung (26) umgibt und dabei die axiale Verschiebung des Käfigs zuläßt.

4. Mechanismus nach einem der Ansprüche 1 bis 3, dadurch gekennzeichnet, daß die Steuerung des Umkehrers durch einen elektrischen Schaltkreis (27) erfolgt, der über den elektrischen Kreis (28) der Schaftmaschine versorgt wird und sich unter Spannung befindet, wenn letztere im Lösebetrieb läuft.

Fig. 1

Fig. 2

Fig. 3

*Fig. 4*